# EUROPEAN PATENT APPLICATION

(11) **EP 2 568 585 A2**
(43) Date of publication of application: **13.03.2013**
(21) Application number: 12156105.4
(22) Date of filing: 20.02.2012
(51) Int. Cl.: H02K 15/095

(54) **Manufacturing method of rotating electric machine and rotating electric machine**

(30) Priority: 07.09.2011 JP 2011195352
(71) Applicant: Kabushiki Kaisha Yaskawa Denki, Kitakyushu-shi, Fukuoka 806-0004 (JP)
(72) Inventor: Sajkawa, Yuji, Kitakyushu-shi, Fukuoka 806-0004 (JP); Okahisa, Manabu, Kitakyushu-shi, Fukuoka 806-0004 (JP)
(74) Representative: Grünecker, Kinkeldey, Stockmair & Schwanhäusser

(57) **Abstract**

A manufacturing method of a rotating electric machine (1) according to an embodiment includes forming a stator (6) by selectively attaching any one of a first stator winding (62) and a second stator winding (62) to a stator core (61), forming a rotor (7) to be arranged on an inner periphery of the stator (6) to face the stator (6), and arranging the stator (6) and the rotor (7) in a housing (2, 3A, 3B).

## Description

### FIELD

The embodiment discussed herein is directed to a manufacturing method of a rotating electric machine and a rotating electric machine.

### BACKGROUND

Conventionally, rotating electric machines, such as motors and electric generators, are widely used in various fields. For example, in a worksite such as a production plant, a robot, which includes a plurality of drive shafts and in which each drive shaft is driven by a motor, is widely used.

For example, a motor described in Japanese Patent Laid-open Publication No. 2011-030320 and the like is configured by arranging a rotor on the inner peripheral side of a stator to face the stator and the rotor and the stator appropriate for the rated rotational speed and the rated torque are used. Typically, motors with different rated torques are provided for each rated rotational speed in a lineup. When designing a robot in which each drive shaft is driven by a motor, an appropriate motor is selected from a lineup according to the required rotational speed and torque.

However, when there is no appropriate motor in the provided lineup, a motor is newly developed. In a new motor, appropriate rotor and stator capable of outputting desired rotational speed and torque are individually designed, so that there are problems in cost and delivery time. Moreover, motor characteristic are determined on the premise of a general use in a lineup of motors. Therefore, motors are designed for use in a wide rotational speed range from a low-speed range to a high-speed range, so that, in an application in only a low-speed range is used, the motor characteristics in a high-speed range are unnecessary, resulting in excessive quality. Moreover, there is a direct drive motor as a low-speed motor, however, this motor is a specialized motor for a low-speed range and the motor design and the motor structure are different, so that dedicated equipment is needed for a motor manufacturing line. As above, many types of motors are needed for optimal motor selection, so that diversification of the motor structure and the motor manufacturing equipment is required and an optimal motor is not selected easily.

An object of an aspect of an embodiment is to provide a manufacturing method of a rotating electric machine capable of easily providing rotating electric machines with different characteristics and a rotating electric machine.

### SUMMARY

A manufacturing method of a rotating electric machine according to an embodiment includes forming a stator by selectively attaching any one of a first stator winding and a second stator winding to a stator core, forming a rotor to be arranged on an inner periphery of the stator to face the stator, and arranging the stator and the rotor in a housing.

According to an aspect of an embodiment, there is an effect in that it is possible to provide a manufacturing method of a rotating electric machine capable of easily providing rotating electric machines with different characteristics.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:

FIG. 1 is a longitudinal cross-sectional view of a motor according to an embodiment;

FIG. 2 is an explanatory diagram of a stator and a rotor of the motor according to the embodiment;

FIG. 3 is a diagram illustrating a procedure of a manufacturing method according to the embodiment; and

FIG. 4 is a diagram illustrating an example of rated characteristics of the motor.

### DESCRIPTION OF EMBODIMENT

Hereinafter, an embodiment of a rotating electric machine (for example, a motor or a power generator) and a manufacturing method thereof disclosed in the present application will be described in detail based on the drawings. The present invention is not limited to this embodiment. Moreover, hereinafter, the manufacturing method of a rotating electric machine is simply described as a "manufacturing method".

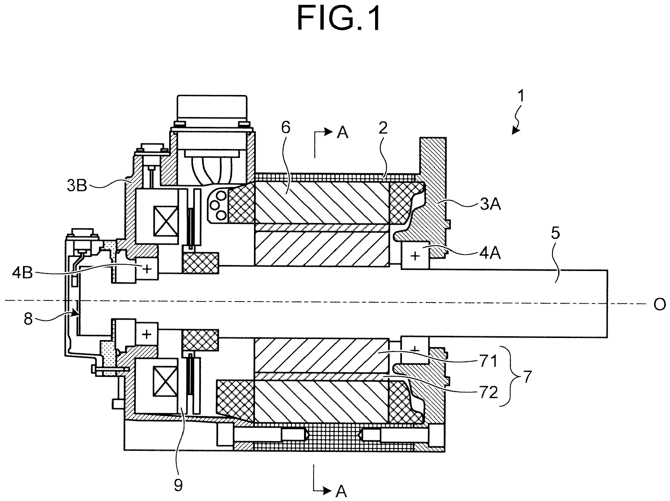

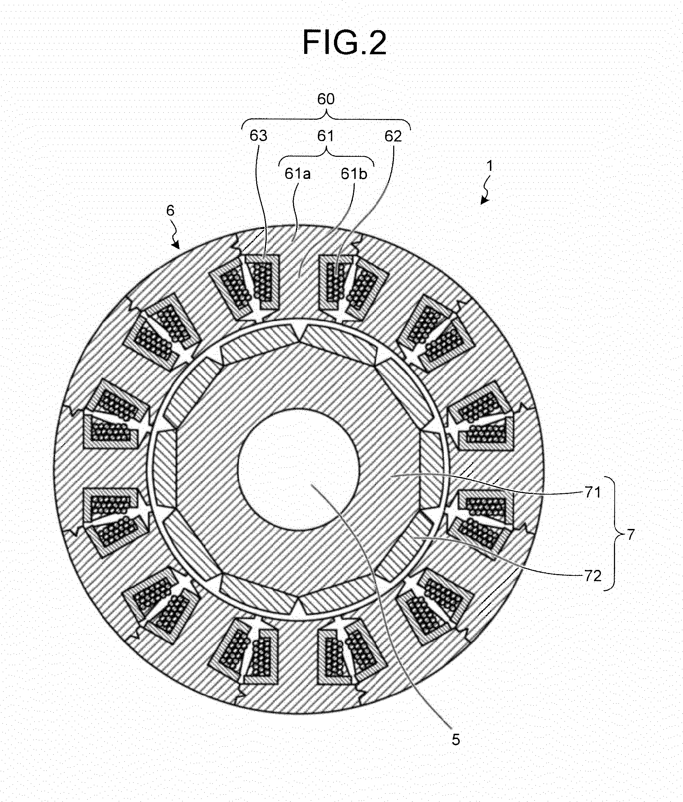

First, the configuration of a motor manufactured by a manufacturing method according to the embodiment is explained. FIG. 1 is a longitudinal cross-sectional view of the motor according to the embodiment and FIG. 2 is an explanatory diagram of a stator and a rotor according to the embodiment. FIG. 2 illustrates the portions of the stator and the rotor in the A-A line cross section in FIG. 1.

As shown in FIG. 1, a motor 1 according to the present embodiment includes a frame 2, brackets 3A and 3B, bearings 4A and 4B, a shaft 5, a stator 6, a rotor 7, an encoder 8, and a brake 9. In the motor 1 according to the present embodiment, the frame 2 and the brackets 3A and 3B form a housing.

The frame 2 is formed into a tubular shape and the outer periphery of the stator 6 is fixed to the inner peripheral surface of the frame 2. The bracket 3A is formed into a substantially disk shape, is attached to the opening end of the frame 2 on the load side at the outer peripheral portion thereof, and holds the bearing 4A at the inner peripheral portion. In the similar manner, the bracket 3B is formed into a substantially disk shape, is attached to the opening end of the frame 2 on a side, which is opposite to the load side, at the outer peripheral portion thereof, and holds the bearing 4B at the inner peripheral portion.

The center of the shaft 5 is located on a center axis O of the frame 2 and the shaft 5 is supported by the bearings 4A and 4B to be rotatable about the center axis O. Moreover, the encoder 8 is attached to a side, which is opposite to the load side, of the bracket 3B and the rotational speed of the shaft 5 is detected by the encoder 8. Moreover, the brake 9 is attached to the load side of the bracket 3B and rotation of the shaft 5 is stopped by the brake 9.

As shown in FIG. 2, the stator 6 is formed by annularly connecting a plurality of split stators 60 and the rotor 7 is arranged on the inner peripheral side of the stator 6 to face the stator 6 with a gap therebetween. The split stator 60 includes a split stator core 61, a split stator winding 62, and a protection member 63.

The split stator core 61 includes an arcuate yoke portion 61a curved along the inner periphery of the frame 2 and a teeth portion 61b projecting radially inwardly of the yoke portion 61a, and the stator core of the motor 1 is formed by annularly connecting the split stator cores 61.

On each split stator core 61, an insulation coated wire is wound via the protection member 63. Consequently, the split stator winding 62 is attached to each split stator core 61. As the insulation coated wire, for example, a copper wire or an aluminum wire is used.

In the stator core of the stator 6 shown in FIG. 2, the number of magnetic poles (the number of poles) is 12, however, it is not limited thereto. For example, the number of magnetic poles of the stator core can be set in a range of 8 to 12.

As shown in FIG. 2, the rotor 7 includes a rotor core 71 and a plurality of permanent magnets 72 and rotates about the center of the shaft 5 as the center axis O. The rotor core 71 is formed by stacking a plurality of sheets of material, such as magnetic steel sheets, for reducing eddy current. Moreover, the rotor core 71 is formed into a tubular shape and is attached to the shaft 5.

The permanent magnets 72 are arranged side by side along the outer peripheral surface of the rotor core 71. The permanent magnets 72 having the same magnetic pole are arranged side by side in the outer periphery of the rotor core 71 in the extending direction of the shaft 5 and the permanent magnets 72 having different magnetic poles are arranged alternatively side by side in the circumferential direction of the rotor core 71. The arrangement of the permanent magnets 72 is not limited thereto and different arrangements can be employed.

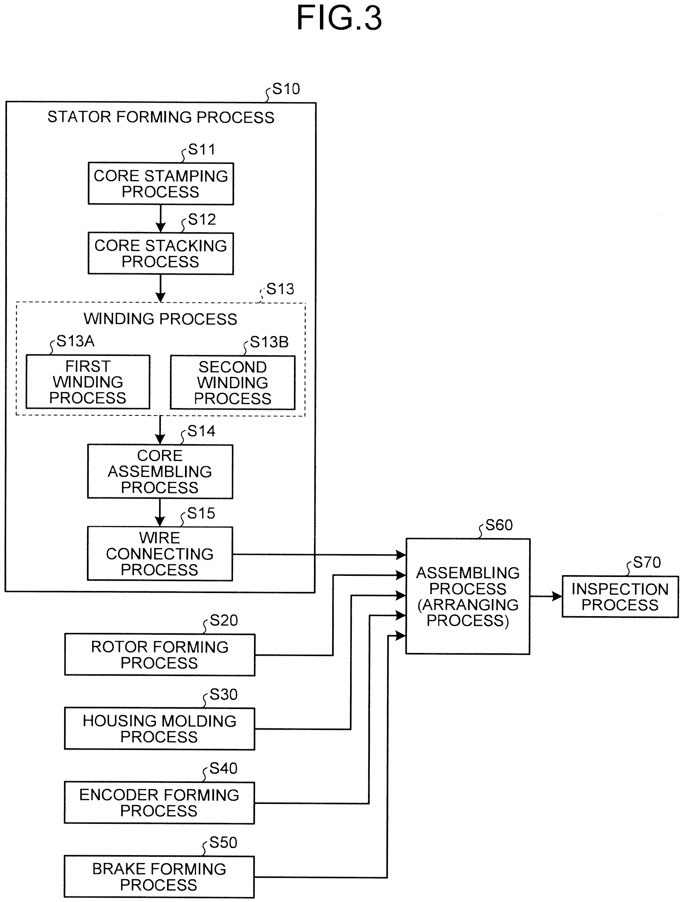

Next, the manufacturing method according to the embodiment is explained. FIG. 3 is a diagram illustrating the procedure of the manufacturing method according to the embodiment.

As shown in FIG. 3, the manufacturing method according to the embodiment includes a stator forming process S10, a rotor forming process S20, a housing molding process S30, an encoder forming process S40, a brake forming process S50, an assembling process S60, and an inspection process S70.

Moreover, the stator forming process S10 includes a core stamping process S11, a core stacking process S12, a winding process S13, a core assembling process S14, and a wire connecting process S15.

In the core stamping process S11, stator core pieces for forming the split stator core 61 are formed by stamping a sheet of material such as a magnetic steel sheet, by a mold. A plurality of stator core pieces formed in the core stamping process S11 is stacked in the core stacking process S12, thereby forming the split stator core 61.

In the winding process S13, a first winding process S13A and a second winding process S13B are selectively performed. In the first winding process S13A, a first stator winding is attached to the split stator core 61 by winding an insulation coated wire having a wire diameter φ_{A} on the teeth portion 61b of the split stator core 61 via the protection member 63 N_{A} times. On the other hand, in the second winding process S13B, a second stator winding is attached to the split stator core 61 by winding an insulation coated wire having a wire diameter φ_{B} (<φ_{A}) on the teeth portion 61b of the split stator core 61 via the protection member 63 N_{B} (>N_{A}) times.

Because the wire diameter φ_{B} of the second stator winding is smaller than the wire diameter φ_{A} of the first stator winding, the resistance of the second stator winding becomes higher than the resistance of the first stator winding. Moreover, because the number of turns N_{B} of the second stator winding is larger than the number of turns N_{A} of the first stator winding, the resistance of the second stator winding becomes higher than the resistance of the first stator winding. Therefore, in the winding process S13, the stator windings having different resistances can be selectively attached to the same split stator core 61.

In the winding process S13, if a winding machine, which can selectively wind a plurality of types of insulation coated wires on the split stator core 61, is used, the first winding process S13A and the second winding process S13B can be selectively performed easily.

Moreover, in this embodiment, an example of attaching the split stator winding 62 to the split stator core 61 is explained, however, the stator core is not limited thereto. For example, as the stator core, a stator core of a two split core system composed of an inner core and an outer core may be employed and a stator winding may be attached to the stator core.

Moreover, the resistance of a stator winding may be changed by changing the material of a wire forming the stator winding. For example, in the first winding process S13A, a wire forming a stator winding is a copper wire and, in the second winding process S13B, a wire forming a stator winding is an aluminum wire. Copper and aluminum have different conductivity, so that even when the number of turns and the wire diameter of a stator winding are set the same in the first winding process S13A and the second winding process S13B, the resistance of the first stator winding and the resistance of the second stator winding can be made different from each other.

In the core assembling process S14, an annular stator core is formed by connecting 12 split stators 60 to each of which the stator winding is attached. Thereafter, in the wire connecting process S15, the insulation coated wires drawn out from the split stator windings 62 of the split stator cores 61 are connected to form the stator 6.

In this manner, in the stator forming process S10, the first winding process S13A and the second winding process S13B are selectively performed. In other words, the first stator forming process of forming the stator 6 by attaching the first stator winding to the split stator cores 61 and the second stator forming process of forming the stator 6 by attaching the second stator winding, which is different from the first stator winding, to the split stator cores 61 are selectively performed.

In the rotor forming process S20, a plurality of rotor core pieces is formed by stamping a sheet of material such as a magnetic steel sheet, by a mold. Then, the rotor core 71 is formed by stacking these rotor core pieces.

The rotor core 71 formed in such a manner is press-fitted into the shaft 5. Thereafter, the permanent magnets 72 are attached to the outer periphery of the rotor core 71 attached to the shaft 5. Furthermore, the shaft 5 is inserted into the bearing 4A to arrange the bearing 4A on the load side of the rotor core 71.

In the housing molding process S30, each of the frame 2 and the brackets 3A and 3B is molded. The frame 2 and the brackets 3A and 3B can be molded, for example, by injecting molten metal into a casting mold. Moreover, in the encoder forming process S40, the encoder 8 is formed and, in the brake forming process S50, the brake 9 is formed.

After the above described processes S10 to S50 are finished, the assembling process S60 is performed. In this assembling process S60, the stator 6 formed in the stator forming process S10 is fixed to the inner periphery of the frame 2 molded in the housing molding process S30, by shrink fitting. Then, the bracket 3A is attached to the load side of the frame 2 to which the stator 6 is arranged in such a manner.

Next, the rotor 7 attached to the shaft 5 is inserted from a side, which is opposite to the load side, of the frame 2 to arrange the rotor 7 and the shaft 5 in the frame 2. Thereafter, the brake 9 is attached by inserting the brake 9 into the shaft 5 from a side, which is opposite to the load side, of the frame 2, and moreover, the bracket 3B, the bearing 4B, the encoder 8, and the like are attached to assemble the motor 1. Finally, in the inspection process S70, the quality of the motor 1 is determined by inspecting the characteristics of the assembled motor 1.

In this manner, in the manufacturing method according to the present embodiment, in the winding process S13, stator windings in which the number of turns and the wire diameter are different, are selectable, so that motors having different characteristics can be easily manufactured.

For example, in the winding process S13, when the first winding process S13A is selected, a stator (hereinafter, described as a first stator), in which the first stator winding in which the wire diameter is φ_{A} and the number of turns is N_{A} is attached to the split stator cores 61, is formed. On the other hand, in the winding process S13, when the second winding process S13B is selected, a stator (hereinafter, described as a second stator), in which the second stator winding in which the wire diameter is φ_{B} and the number of turns is N_{B} is attached to the split stator cores 61, is formed.

Therefore, it is possible to selectively manufacture the motor 1 having the first stator in which the first stator winding is attached to the split stator cores 61 and the motor 1 having the second stator in which the second stator winding, whose characteristics are different from the first stator winding, is attached to the split stator cores 61.

In the winding process S13, a different stator winding is formed by changing the number of turns and the wire diameter, however, a different stator winding can be formed also by changing only one of the number of turns and the wire diameter. Moreover, a different stator winding can be formed also by changing the material of a wire without changing the number of turns and the wire diameter. Furthermore, a different stator winding may be formed by changing at least two of the number of turns, the wire diameter, and the material.

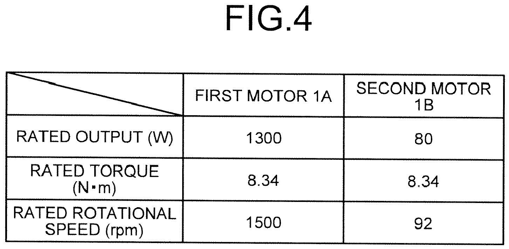

FIG. 4 illustrates an example of the motor 1 (hereinafter, described as a first motor 1A) having the first stator and the motor 1 (hereinafter, described as a second motor 1B) having the second stator.

As described above, the wire diameter φ_{B} of the second stator winding is smaller than the wire diameter φ_{A} of the first stator winding and the number of turns N_{B} of the second stator winding is larger than the number of turns N_{A} of the first stator winding. Therefore, the resistance of the second stator winding becomes higher than the resistance of the first stator winding. Moreover, when the torques generated by the motors are the same, the current flowing in the second stator winding becomes smaller than the current flowing in the first stator winding.

Furthermore, when the number of turns of a stator winding is increased, voltage generated by a motor becomes high, so that the rated rotational speed of the second motor 1B becomes smaller than the rated rotational speed of the first motor 1A. In the example shown in FIG. 4, whereas the rated rotational speed of the first motor 1A is 1500 (rpm), the rated rotational speed of the second motor 1B is 92 (rpm).

The rated output of a motor is a value defined by multiplying the rated rotational speed by the rated torque. Therefore, when the rated rotational speed decreases, the rated output also decreases. In the second motor 1B, the rated rotational speed decreases compared with the first motor 1A, so that the rated output also decreases. In the example shown in FIG. 4, whereas the rated output of the first motor 1A is 1300 (W), the rated output of the second motor 1B is 80 (W). Consequently, the motor rated output can be reduced by reducing the rated rotational speed without changing the motor torque, enabling to reduce the motor power consumption. Moreover, the capacity of a motor driving apparatus can be reduced by reducing current of a motor, which results in reduction in cost and power consumption also in the driving apparatus.

In this manner, in the manufacturing method according to the present embodiment, motors having different characteristics can be easily manufactured without changing the motor size and the motor rated torque by selectively attaching stator windings, in which the number of turns and the wire diameter are different, to the stator core.

For example, in an existing motor manufacturing line, motors having different characteristics can be easily manufactured. Specifically, a winding process performed in the existing motor manufacturing line is set as the first winding process, and the first winding process and the second winding process of attaching a stator winding of different number of windings and wire diameter to a stator core are selectively performed.

In this manner, a motor having a desired rated rotational speed can be provided by changing a stator winding of an existing motor, so that the cost of a motor can be reduced compared with a case of newly designing and manufacturing a motor.

For example, when designing a robot that includes a plurality of joint axes and drives the joint axes by a motor, a rotational speed and a torque are set to appropriate rated rotational speed and rated torque according to the joint axes to be driven, however, there is often no motor appropriate for the set rotational speed and torque. In such a case, a motor having a motor torque more than necessary i.e., a motor with a margin, is selected, or a motor according to set rated rotational speed and rated torque is individually designed and manufactured.

Because the rated rotational speed and the rated torque are determined according to the characteristics of a rotor and the characteristics of a stator, if a rotor and a stator are designed and manufactured individually, the design cost and the manufacturing cost increase. However, in the manufacturing method according to the present embodiment, a motor having a desired rated rotational speed can be provided by changing a stator winding of an existing motor, so that the cost of a motor can be reduced.

In the above embodiment, two winding processes, that is, the first winding process S13A and the second winding process S13B are selectively performed, however, the winding process is not limited to this. For example, any one of three or more winding processes, in which the wire diameter and the number of turns are different, may be selectively performed.

Consequently, it becomes possible to easily provide a lineup of motors having different rated rotational speeds for each rated torque, enabling to largely increase options for a user to select a motor. In other words, a motor can be easily selected with the rated torque as a reference.

The configuration of the motor 1 is not limited to that shown in FIG. 1 and FIG. 2, and motors having other configurations may be used as long as a motor includes a stator in which a stator winding is attached to stator cores and a rotor arranged on the inner peripheral side of the stator to face the stator.

## Claims

1. A manufacturing method of a rotating electric machine (1) comprising:
a stator forming process of selectively performing a first process of forming a stator (6) by attaching a first stator winding (62) to a stator core (61) and a second process of forming a stator (6) by attaching a second stator winding (62) different from the first stator winding (62) to a stator core (61) same as the stator core (61) used in the first process;
a rotor forming process of forming a rotor (7) to be arranged on an inner periphery of the stator (6) to face the stator (6); and
an arranging process of arranging the stator (6) formed by the stator forming process and the rotor (7) formed by the rotor forming process in a housing (2, 3A, 3B).

2. The manufacturing method of a rotating electric machine (1) according to claim 1, wherein a wire diameter and/or the number of turns is different between the first stator winding (62) and the second stator winding (62).

3. The manufacturing method of a rotating electric machine (1) according to claim 1 or 2, wherein a material of a wire is different between the first stator winding (62) and the second stator winding (62).

4. A rotating electric machine (1) comprising a stator core (61), a rotor (7), and a frame (2) same as another rotating electric machine, wherein
a stator winding (62) attached to the stator core (61) is different from a stator winding (62) included in the another rotating electric machine (1).

5. The rotating electric machine (1) according to claim 4, wherein a wire diameter and/or the number of turns is different between the stator winding (62) attached to the stator core (61) and the stator winding (62) included in the another rotating electric machine (1).

6. The rotating electric machine (1) according to claim 4 or 5, wherein a material of a wire is different between the stator winding (62) attached to the stator core (61) and the stator winding (62) included in the another rotating electric machine (1).
